# EUROPEAN PATENT SPECIFICATION

(11) **EP 4 190 794 B1**
(45) Date of publication and mention of the grant of the patent: **03.09.2025**
(21) Application number: 21850175.7
(22) Date of filing: 30.07.2021
(51) Int. Cl.: C07F 7/18, C07F 7/08, C07F 7/12, C07F 7/14

(54) **ALKOXYSILANE COMPOUND PREPARATION METHOD**
VERFAHREN ZUR HERSTELLUNG EINER ALKOXYSILANVERBINDUNG
PROCÉDÉ DE PRÉPARATION D'UN COMPOSÉ ALKOXYSILANE

(30) Priority: 31.07.2020 KR 20200096158
(43) Date of publication of application: 07.06.2023
(73) Proprietor: LG Chem, Ltd., Seoul 07336 (KR)
(72) Inventor: LEE, Kyu Reon, Daejeon 34122 (KR); BAEK, Se Won, Daejeon 34122 (KR)
(74) Representative: Goddar, Heinz J.
(86) International application number: PCT/KR2021/009971
(87) International publication number: WO 2022/025702

(56) References cited:
- WO-A1-2016/167494
- KR-A- 20100 133 268
- KR-A- 20120 017 952
- KR-A- 20120 126 741
- KR-A- 20190 008 007
- US-A1- 2011 240 907
- US-B1- 6 323 356
- LANGER STANLEY H. ET AL: "Preparation and Properties of Trimethylsilyl Ethers and Related Compounds", 15 July 1957 (1957-07-15), XP093205621, Retrieved from the Internet <URL:https://pubs.acs.org/doi/abs/10.1021/jo01095a017>

## Description

### [TECHNICAL FIELD]

The present invention relates to a method of manufacturing an alkoxysilane compound, and more particularly, to a method of manufacturing an alkoxysilane compound used for hydrophobic surface modification of a silica aerogel.

### [BACKGROUND ART]

Aerogels are highly porous materials that are composed of nanoparticles, and have attracted attention for use as high-efficiency insulating materials, soundproof materials, and the like because they have high porosity, a high specific surface area, and low thermal conductivity. Because such aerogels have very low mechanical strength due to their porous structure, aerogel composites, in which an aerogel is impregnated into fibrous blankets formed of existing insulating fibers (such as organic or inorganic fibers) so that the aerogel is bound to the fibrous blankets, have been developed. As one example, a silica aerogel-containing blanket using a silica aerogel is manufactured through a silica sol preparation step, a gelation step, an aging step, a surface modification step, and a drying step.

A silazane-based compound used as a surface modifying agent in a step of surface modifying a silica aerogel and a silica aerogel-containing blanket is decomposed into an alkoxysilane compound or a silanol compound to generate a large amount of NH₃. NH₃ is dissolved in a solvent present in a hydrogel, and is reacted with carbon dioxide, which is used as an extraction solvent during subsequent supercritical drying, to form ammonium carbonate salts. Then, as the temperature decreases, the ammonium carbonate salts precipitate to form a solid-phase powder, which causes problems such as scale formation, pipe or valve clogging, or the like in subsequent processes.

Therefore, it has been preferred to use an alkoxysilane compound, which does not generate ammonia, instead of a silazane-based compound, as the surface modifying agent in the step of surface modifying a silica aerogel or a silica aerogel-containing blanket. Accordingly, there is a need for a novel method of manufacturing an alkoxysilane compound capable of more effectively removing ammonia generated as a by-product when an alkoxysilane compound is manufactured using the silazane-based compound.

### [PRIOR ART DOCUMENT]

### [PATENT DOCUMENT]

Patent Document 1: Korean Patent Publication No. 10-2016-0100082.

WO 2016/167494 A1 discloses a method for manufacturing a silica aerogel-containing blanket, comprising the steps of: preparing a reaction solution by reacting a silazane-based surface modifier and an alcohol-based compound; preparing a silica gel-substrate composite by adding a silica precursor, water and a polar organic solvent to the reaction solution so as to prepare a silica sol and then dipping a substrate for a blanket into the same so as to gellify the same; and drying the silica gel-substrate composite.

Langer, S.H. et a1. relates to the manufacturing of alkoxysilane compounds (Journal of Organic Chemistry, 23, 1, 50-57).

### [DISCLOSURE]

### [TECHNICAL PROBLEM]

Therefore, it is an object of the present invention to provide a novel method of manufacturing an alkoxysilane compound capable of more effectively removing ammonia generated as a by-product during a process of manufacturing an alkoxysilane compound using a silazane-based compound.

### [TECHNICAL SOLUTION]

To achieve the above object, according to one aspect of the present invention, there is provided a method of manufacturing an alkoxysilane compound, which includes: (1) adding an alcohol to a silazane-based compound represented by the following Formula 1 and allowing the alcohol to react with the silazane-based compound to prepare a first mixture including an alkoxysilane compound and ammonia; (2) adding an alcohol and a compound represented by the following Formula 2 to the first mixture and allowing the alcohol and the compound of Formula 2 to react with the first mixture to prepare a second mixture in which an additional alkoxysilane compound and an ammonium salt are generated; (3) adding an aqueous solvent to the second mixture to dissolve the ammonium salt; and (4) separating and removing an aqueous layer in which the ammonium salt is dissolved in order to obtain an alkoxysilane compound:

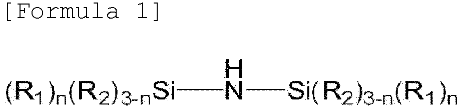

[Formula 2] (R₁)ₙ(R₂)₃₋ₙSi-X

wherein the alcohol is a compound represented by the following Formula 3, and the alkoxysilane compound is a compound represented by the following Formula 4:

[Formula 3] R₃OH

[Formula 4] (R₁)ₙ(R₂)₃₋ₙSi-O-R₃

wherein R₁ and R₃ are each independently an alkyl group having 1 to 8 carbon atoms, R₂ is a hydrogen atom or an alkyl group having 1 to 8 carbon atoms, n is an integer ranging from 1 to 3, and X is Cl or Br.

Further embodiments are disclosed in the dependent claims.

### [ADVANTAGEOUS EFFECTS]

The method of manufacturing an alkoxysilane compound according to the present invention may have an effect of enhancing a yield of an alkoxysilane compound to be manufactured while effectively removing ammonia formed as a by-product during a process of manufacturing an alkoxysilane compound using a silazane-based compound by manufacturing an additional alkoxysilane compound using ammonia and simultaneously converting the ammonia into an ammonium salt.

### [MODE FOR CARRYING OUT THE INVENTION]

Hereinafter, the present invention will be described in further detail in order to aid in understanding the present invention.

A method of manufacturing an alkoxysilane compound according to the present invention includes: (1) adding an alcohol to a silazane-based compound represented by the following Formula 1 and allowing the alcohol to react with the silazane-based compound to prepare a first mixture including an alkoxysilane compound and ammonia; (2) adding an alcohol and a compound represented by the following Formula 2 to the first mixture and allowing the alcohol and the compound of Formula 2 to react with the first mixture to prepare a second mixture in which an additional alkoxysilane compound and an ammonium salt are generated; (3) adding an aqueous solvent to the second mixture to dissolve the ammonium salt; and (4) separating and removing an aqueous layer in which the ammonium salt is dissolved in order to obtain an alkoxysilane compound:

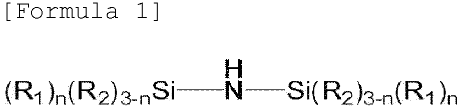

[Formula 2] (R₁)ₙ(R₂)₃₋ₙSi-X

wherein the alcohol is a compound represented by the following Formula 3, and the alkoxysilane compound is a compound represented by the following Formula 4:

[Formula 3] R₃OH

[Formula 4] (R₁)ₙ(R₂)₃₋ₙSi-O-R₃

wherein R₁ and R₃ are each independently an alkyl group having 1 to 8 carbon atoms, R₂ is a hydrogen atom or an alkyl group having 1 to 8 carbon atoms, n is an integer ranging from 1 to 3, and X is Cl or Br.
(1) Adding alcohol to silazane-based compound represented by Formula 1 and allowing alcohol to react with silazane-based compound to prepare first mixture including alkoxysilane compound and ammonia

In Step (1), an alcohol is added and reacted with a silazane-based compound represented by the following Formula 1 to synthesize an alkoxysilane compound. In this case, a first mixture including an alkoxysilane compound and ammonia is prepared while ammonia is generated as a by-product. 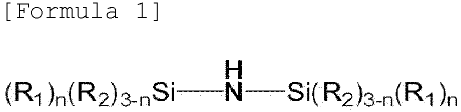 wherein R₁ is an alkyl group having 1 to 8 carbon atoms, R₂ is a hydrogen atom or an alkyl group having 1 to 8 carbon atoms, and n is an integer ranging from 1 to 3.

Also, R₁ may be an alkyl group having 1 to 6 carbon atoms, and R₂ may be a hydrogen atom or an alkyl group having 1 to 6 carbon atoms.

In addition, R₁ may be an alkyl group having 1 to 4 carbon atoms, and R₂ may be a hydrogen atom or an alkyl group having 1 to 4 carbon atoms.

According to one embodiment of the present invention, the silazane-based compound may include one or more selected from the group consisting of a dialkyldisilazane, a tetraalkyldisilazane, and a hexaalkyldisilazane.

Also, specific examples of the silazane-based compound may include 1,3-diethyldisilazane, 1,1,3,3-tetramethyldisilazane, 1,1,3,3-tetraethyldisilazane, 1,1,1,3,3,3-hexamethyldisilazane (HMDS), 1,1,1,3,3,3-hexaethyldisilazane, 1,1,3,3-tetraethyldisilazane, 1,3-diisopropyldisilazane, or the like, which may be used alone or as a mixture thereof.

Meanwhile, examples of the alcohol may include monohydric alcohols such as methanol, ethanol, propanol, isopropanol, butanol, pentanol, hexanol, heptanol, and octanol, which may be used alone or as a mixture thereof. Specifically, the alcohol may include one or more selected from the group consisting of methanol, ethanol, propanol, isopropanol, butanol, pentanol, and hexanol. More specifically, the alcohol may include one or more selected from the group consisting of methanol, ethanol, propanol, isopropanol, and butanol.

The alkoxysilane compound synthesized by adding the alcohol to the silazane-based compound represented by Formula 1 and allowing the alcohol to react with the silazane-based compound may include one or more selected from the group consisting of a monoalkoxysilane compound, a dialkoxysilane compound, and a trialkoxysilane compound. When the alcohol is a compound represented by the following Formula 3, the alkoxysilane compound is specifically a compound represented by the following Formula 4:

[Formula 3] **R₃OH**

[Formula 4] **(R₁)ₙ(R₂)₃₋ₙSi-O-R₃**

wherein R₁ and R₃ are each independently an alkyl group having 1 to 8 carbon atoms, R₂ is a hydrogen atom or an alkyl group having 1 to 8 carbon atoms, and n is an integer ranging from 1 to 3.

Also, R₁ and R₃ may be each independently an alkyl group having 1 to 6 carbon atoms, and R₂ may be a hydrogen atom or an alkyl group having 1 to 6 carbon atoms.

In addition, R₁ and R₃ may be each independently an alkyl group having 1 to 4 carbon atoms, and R₂ may be each independently a hydrogen atom or an alkyl group having 1 to 4 carbon atoms.

The reaction of the alcohol with the silazane-based compound may be represented by the following Scheme 1. In this case, one equivalent of a silazane-based compound is reacted with 2 equivalents of an alcohol to generate 2 equivalents of an alkoxysilane compound, and one equivalent of ammonia is generated as a by-product. The first mixture thus prepared may include an alkoxysilane compound and ammonia: 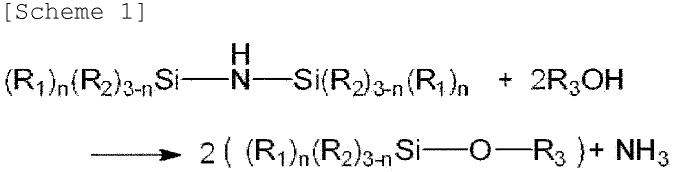 wherein R₁ to R₃ and n are as defined in Formulas 1, 3, and 4.

(2) Adding alcohol and compound represented by Formula 2 to first mixture and allowing alcohol and compound of Formula 2 to react with first mixture to prepare second mixture in which additional alkoxysilane compound and ammonium salt are generated

In Step (2), an alcohol and a compound represented by the following Formula 2 are added and reacted with the prepared first mixture to generate an additional alkoxysilane compound through a reaction of ammonia with the compound represented by the following Formula 2. At the same time, ammonia is converted into an ammonium salt. That is, in Step (2), an additional alkoxysilane compound is generated through a reaction of ammonia included in the first mixture with the compound represented by the following Formula 2, and the ammonia is simultaneously converted into an ammonium salt. Then, the ammonia converted into the ammonium salt may be removed through subsequent processes:

[Formula 2] (R₁)ₙ(R₂)₃₋ₙSi-X

wherein R₁ is an alkyl group having 1 to 8 carbon atoms, R₂ is a hydrogen atom or an alkyl group having 1 to 8 carbon atoms, n is an integer ranging from 1 to 3, and X is Cl or Br.

Also, R₁ may be an alkyl group having 1 to 6 carbon atoms, and R₂ may be a hydrogen atom or an alkyl group having 1 to 6 carbon atoms.

In addition, R₁ may be an alkyl group having 1 to 4 carbon atoms, and R₂ may be a hydrogen atom or an alkyl group having 1 to 4 carbon atoms.

Further, X may be Cl.

According to one embodiment of the present invention, the alcohol may be the same alcohol as used in Step (1). When the alcohol used in Step (2) is identical to the alcohol used in Step (1), the alkoxysilane compound manufactured in Step (1) may be identical to the additional alkoxysilane compound manufactured in Step (2).

The reaction of Step (2) may be represented by the following Scheme 2.

[Scheme 2] NH₃ + (R₁)ₙ(R₂)₃₋ₙSi-X + R₃OH → (R₁)ₙ(R₂)₃₋ₙSi-O-R₃ + NH₄X

In Scheme 2, the ammonia (NH₃) is generated as a result of decomposition of the silazane-based compound in Step (1) so that the ammonia is included in the first mixture. In Step (2), the alcohol and the compound represented by the following Formula 2 are reacted with ammonia generated as a by-product of reaction of the alcohol with the silazane-based compound to prepare a second mixture in which an additional alkoxysilane compound and an ammonium salt are generated. That is, the method of manufacturing an alkoxysilane compound according to the present invention may have an effect of converting ammonia into the form of an ammonium salt that may be easily removed and simultaneously generating an additional alkoxysilane compound using the ammonia that is, conventionally, merely a target of removal.

The compound represented by Formula 2 may be added at the same equivalent(s) as ammonia in the first mixture. When the compound represented by Formula 2 is added at the same equivalent(s) as ammonia in the first mixture, ammonia may be effectively removed, and the additional alkoxysilane compound may be manufactured with high yield. When the compound represented by Formula 2 is added at an amount much lower than ammonia in the first mixture, ammonia may be not completely converted into ammonium, which results in poor ammonia removal efficiency. On the other hand, when the compound represented by Formula 2 is added at an amount much larger than ammonia in the first mixture, side reactions may occur, which makes it difficult to control the process.

In order to add the compound represented by Formula 2 at the same equivalent(s) as ammonia in the first mixture, the method of manufacturing an alkoxysilane compound according to one embodiment of the present invention further include: measuring a concentration of ammonia included in the first mixture before introducing the compound represented by Formula 2 to the first mixture. For example, as shown in Step (1), after the alcohol is added and reacted with the silazane-based compound represented by Formula 1, a concentration of ammonia included in the first mixture may be measured. Thereafter, the compound represented by Formula 2 may be added at the same equivalent(s) based on the concentration of ammonia.

### (3) Adding aqueous solvent to second mixture to dissolve ammonium salt

In Step (3), an aqueous solvent is added to the second mixture to dissolve the ammonium salt converted from ammonia in Step (2). The second mixture includes an alkoxysilane compound and an ammonium salt. In this case, because the alkoxysilane compound is not dissolved in the aqueous solvent and only the ammonium salt is dissolved in the aqueous solvent, the ammonium salt may be separated into an aqueous layer.

The aqueous solvent is used to dissolve the ammonium salt converted from ammonia in Step (2). Therefore, the aqueous solvent may be used to dissolve the ammonium salt without dissolving the alkoxysilane compound. For example, the aqueous solvent may be water. In this case, the water may be process water, specifically distilled water or ion-exchanged water.

### (4) separating and removing aqueous layer in which ammonium salt is dissolved in order to obtain alkoxysilane compound

In Step (4), an aqueous layer in which the ammonium salt is dissolved is separated from an organic layer of the alkoxysilane compound, and removed to obtain a desired alkoxysilane compound.

As such, the alkoxysilane compound used for hydrophobic surface modification of a silica aerogel may be manufactured from the silazane-based compound using the method of manufacturing an alkoxysilane compound according to the present invention.

Specifically, according to one embodiment of the present invention, the silazane-based compound represented by Formula 1 may be hexamethyldisilazane, the alcohol may be ethanol, and the compound represented by Formula 2 may be trimethylchlorosilane.

When ethanol is added and reacted with the hexamethyldisilazane, a first mixture including trimethylethoxysilane and ammonia is prepared.

When ammonia included in the first mixture is reacted with the trimethylchlorosilane and the ethanol, a chloro of the trimethylchlorosilane is substituted with an ethoxy of the ethanol to generate additional trimethylethoxysilane, and ammonia is converted into ammonium chloride. In this way, in addition to the trimethylethoxysilane manufactured during the preparation of the first mixture, trimethylethoxysilane is further generated during preparation of the second mixture in the method of manufacturing an alkoxysilane compound according to one embodiment of the present invention. Therefore, the trimethylethoxysilane may be obtained with higher yield as compared to the reaction in which ethanol is added to hexamethyldisilazane to generate two molecules of trimethylethoxysilane as known in the related art. Also, an effect of converting ammonia, which is a by-product generated by the decomposition of the hexamethyldisilazane, into an ammonium salt in order to remove ammonia may be achieved as well.

Meanwhile, according to one embodiment of the present invention, the reaction of the alcohol with the silazane-based compound of Step (1) may be performed under the condition of an acid catalyst. The acid catalyst may be used to promote a reaction of the alcohol with the silazane-based compound. In this case, the acid catalyst may include one or more selected from the group consisting of nitric acid, hydrochloric acid, acetic acid, sulfuric acid, and hydrofluoric acid.

Hereinafter, exemplary embodiments of the present invention will be described in detail so that a person having ordinary skill in the art to which the present invention belongs can easily put the invention into practice.

### Example 1

A solution obtained by mixing hexamethyldisilazane (HMDS), ethanol, and HCl at a mole ratio of 1:2:0.00064 was stirred at room temperature for 2 hours to synthesize trimethylethoxysilane (TMES), and a concentration of ammonia in the synthesized trimethylethoxysilane (TMES) was measured. Then, trimethylchlorosilane (TMCS) and ethanol were added at the same equivalent(s) as the measured concentration of ammonia to generate a salt precipitate.

Distilled water was added to the generated trimethylethoxysilane at a volume ratio of 1:1, and stirred to dissolve the salt precipitate. Then, an aqueous layer was discarded to obtain trimethylethoxysilane (TMES) from which ammonia was removed.

### Example 2

Trimethylethoxysilane from which ammonia was removed was obtained in the same manner as in Example 1, except that hexamethyldisilazane and ethanol was mixed at a mole ratio of 1:2, and then reacted for 2 hours under a reflux condition at 75°C.

### Comparative Example 1

Hexamethyldisilazane and ethanol were mixed at a mole ratio of 1:2, and then reacted for 2 hours under a reflux condition at 75°C to synthesize trimethylethoxysilane, and the synthesized trimethylethoxysilane was distilled to obtain trimethylethoxysilane.

### Comparative Example 2

Hexamethyldisilazane and ethanol were mixed at a mole ratio of 1:2, and then reacted for 2 hours under a reflux condition at 75°C to synthesize trimethylethoxysilane, and the synthesized trimethylethoxysilane was further refluxed at 75°C for 24 hours to obtain trimethylethoxysilane.

### Comparative Example 3

Hexamethyldisilazane and ethanol were mixed at a mole ratio of 1:2, and then reacted for 2 hours under a reflux condition at 75°C to synthesize trimethylethoxysilane, and the synthesized trimethylethoxysilane was further refluxed at 75°C for 24 hours, and then distilled to obtain trimethylethoxysilane.

### Experimental Example

### 1) Measurement of ammonia content

A content of ammonia in the trimethylethoxysilane and a content of ammonia remaining in the finally obtained trimethylethoxysilane were titrimetrically analyzed using sulfuric acid, and measured using 87 Titrino plus commercially available from Metrohm AG.

### 2) Yield

The yield of trimethylethoxysilane was calculated according to the following Mathematical Expression 1. Yield (%) = (Number of moles of obtained trimethylethoxysilane/Number of moles of hexamethylsilazane used × 2) × 100

**[Table 1]**

| | Reaction temperatu re (°C) | Content of ammonia in TMES (% by weight) | Final content of residual ammonia (% by weight) | Yield (%) | Manufactu ring time (hr) |
|---|---|---|---|---|---|
| Example 1 | 25 | 2.5 | 0 | 110 | 5 |
| Example 2 | 75 | 0.9 | 0 | 103 | 5 |
| Comparative Example 1 | 75 | 0.9 | 0.1 | 84 | 3 |
| Comparative Example 2 | 75 | 0.9 | 0.1 | 88 | 26 |
| Comparative Example 3 | 75 | 0.9 | 0..05 | 79 | 27 |

As shown in Table 1, it can be seen that final residual ammonia was not observed in the case of Examples 1 and 2, but ammonia finally remained in the case of Comparative Examples 1 to 3, thereby confirming more effective removal of ammonia from the trimethylethoxysilane manufactured by the manufacturing method described in Examples 1 and 2. Also, in the case of Examples 1 and 2, because the yield of trimethylethoxysilane exceeded 100%, the trimethylethoxysilane was obtained at an amount greater than an amount of the trimethylethoxysilane obtained from the reacted hexamethylsilazane. This was because the trimethylethoxysilane was additionally synthesized by the manufacturing method of Examples 1 and 2 by synthesizing trimethylethoxysilane (TMES), measuring a concentration of ammonia in the synthesized trimethylethoxysilane, and adding the trimethylchlorosilane (TMCS) and ethanol at the same equivalent(s) as the measured concentration of ammonia. Therefore, it can be seen that the manufacturing method of Examples 1 and 2 was very effective in removing ammonia and manufacturing an alkoxysilane compound because ammonia was very effectively removed by the manufacturing method of Examples 1 and 2 and the trimethylethoxysilane was additionally obtained using the ammonia to be removed. On the contrary, it can be seen that ammonia was discharged in the form of a gas and removed by distillation after the trimethylethoxysilane was synthesized through a reflux reaction of hexamethyldisilazane and ethanol in the case of Comparative Example 1, and ammonia was discharged in the form of a gas by further refluxing the synthesized trimethylethoxysilane in the case of Comparative Example 2, but the final remaining ammonia was included in the trimethylethoxysilane. In the case of Comparative Example 3, the synthesized trimethylethoxysilane was further refluxed and then re-distilled to further reduce a content of the final remaining ammonia, but ammonia finally remained in the trimethylethoxysilane, and loss of trimethylethoxysilane by the refluxing and distillation occurred.

In terms of the manufacturing time, a total of 5 hours was spent to manufacture the trimethylethoxysilane in the case of Examples 1 and 2, which was shorter than those of Comparative Examples 2 and 3 in which a total of 26 hours and a total of 27 hours were spent to manufacture the trimethylethoxysilane, respectively. In the case of Comparative Example 1, because only the synthesis and distillation of the trimethylethoxysilane were performed, the manufacturing time was only 3 hours in total, which was shorter than those of Examples 1 to 3. However, Comparative Example 1 had an inferior effect to Examples 1 to 3 in that the yield of trimethylethoxysilane was low and a large amount of ammonia finally remained in the trimethylethoxysilane.

## Claims

1. A method of manufacturing an alkoxysilane compound, comprising:
(1) adding an alcohol to a silazane-based compound represented by the following Formula 1 and allowing the alcohol to react with the silazane-based compound to prepare a first mixture comprising an alkoxysilane compound and ammonia;
(2) adding an alcohol and a compound represented by the following Formula 2 to the first mixture and allowing the alcohol and the compound of Formula 2 to react with the first mixture to prepare a second mixture in which an additional alkoxysilane compound and an ammonium salt are generated;
(3) adding an aqueous solvent to the second mixture to dissolve the ammonium salt; and
(4) separating and removing an aqueous layer in which the ammonium salt is dissolved in order to obtain an alkoxysilane compound: 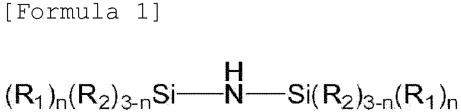
[Formula 2] **(R₁)ₙ(R₂)₃₋ₙSi-X**
wherein the alcohol is a compound represented by the following Formula 3, and the alkoxysilane compound is a compound represented by the following Formula 4:
[Formula 3] R₃OH
[Formula 4] (R₁)ₙ(R₂)₃₋ₙSi-O-R₃
wherein R₁ and R₃ are each independently an alkyl group having 1 to 8 carbon atoms, R₂ is a hydrogen atom or an alkyl group having 1 to 8 carbon atoms, n is an integer ranging from 1 to 3, and X is Cl or Br.

2. The method of claim 1, wherein the silazane-based compound comprises one or more selected from the group consisting of a dialkyldisilazane, a tetraalkyldisilazane, and a hexaalkyldisilazane.

3. The method of claim 1, wherein the alcohol comprises one or more selected from the group consisting of methanol, ethanol, propanol, isopropanol, butanol, pentanol, hexanol, heptanol, and octanol.

4. The method of claim 1, wherein the alkoxysilane compound comprises one or more selected from the group consisting of a monoalkoxysilane compound, a dialkoxysilane compound, and a trialkoxysilane compound.

5. The method of claim 1, wherein the compound represented by Formula 2 is added at the same equivalent(s) as ammonia in the first mixture.

6. The method of claim 1, comprising, before introducing the compound represented by Formula 2 into the first mixture:
measuring a concentration of ammonia included in the first mixture.

7. The method of claim 1, wherein the silazane-based compound is hexamethyldisilazane, the alcohol is ethanol, and the alkoxysilane is trimethylethoxysilane.

8. The method of claim 1, wherein the compound represented by Formula 2 is trimethylchlorosilane.

9. The method of claim 1, wherein the reaction of the alcohol with the silazane-based compound in Step (1) is performed under the condition of an acid catalyst.

10. The method of claim 9, wherein the acid catalyst comprises one or more selected from the group consisting of nitric acid, hydrochloric acid, acetic acid, sulfuric acid, and hydrofluoric acid.

## Patentansprüche

1. Verfahren zur Herstellung einer Alkoxysilanverbindung, umfassend:
(1) Zugeben eines Alkohols zu einer durch die folgende Formel 1 dargestellten Verbindung auf Silazanbasis und Reagierenlassen des Alkohols mit der Verbindung auf Silazanbasis, um eine erste Mischung herzustellen, die eine Alkoxysilanverbindung und Ammoniak umfasst;
(2) Zugeben eines Alkohols und einer durch die folgende Formel 2 dargestellten Verbindung zu der ersten Mischung und Reagierenlassen des Alkohols und der Verbindung der Formel 2 mit der ersten Mischung, um eine zweite Mischung herzustellen, in der eine zusätzliche Alkoxysilanverbindung und ein Ammoniumsalz erzeugt werden;
(3) Zugeben eines wässrigen Lösungsmittels zu der zweiten Mischung, um das Ammoniumsalz aufzulösen; und
(4) Abtrennen und Entfernen einer wässrigen Schicht, in der das Ammoniumsalz aufgelöst ist, um eine Alkoxysilanverbindung zu erhalten: 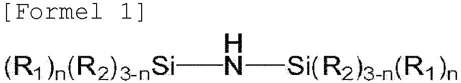
[Formel 2] (R₁)ₙ(R₂)₃₋ₙSi-X
wobei der Alkohol eine durch die folgende Formel 3 dargestellte Verbindung ist und die Alkoxysilanverbindung eine durch die folgende Formel 4 dargestellte Verbindung ist:
[Formel 3] R₃OH
[Formel 4] (R₁)ₙ(R₂)₃₋ₙSi-O-R₃
wobei R₁ und R₃ jeweils unabhängig eine Alkylgruppe mit 1 bis 8 Kohlenstoffatomen sind, R₂ ein Wasserstoffatom oder eine Alkylgruppe mit 1 bis 8 Kohlenstoffatomen ist, n eine ganze Zahl im Bereich von 1 bis 3 ist und X Cl oder Br ist.

2. Verfahren nach Anspruch 1, wobei die Verbindung auf Silazanbasis eines oder mehrere ausgewählt aus der Gruppe bestehend aus einem Dialkyldisilazan, einem Tetraalkyldisilazan und einem Hexaalkyldisilazan umfasst.

3. Verfahren nach Anspruch 1, wobei der Alkohol eines oder mehrere ausgewählt aus der Gruppe bestehend aus Methanol, Ethanol, Propanol, Isopropanol, Butanol, Pentanol, Hexanol, Heptanol und Octanol umfasst.

4. Verfahren nach Anspruch 1, wobei die Alkoxysilanverbindung eines oder mehrere ausgewählt aus der Gruppe bestehend aus einer Monoalkoxysilanverbindung, einer Dialkoxysilanverbindung und einer Trialkoxysilanverbindung umfasst.

5. Verfahren nach Anspruch 1, wobei die durch Formel 2 dargestellte Verbindung mit dem/den gleichen Äquivalent(en) wie Ammoniak in der ersten Mischung zugegeben wird.

6. Verfahren nach Anspruch 1, umfassend, vor dem Einbringen der durch Formel 2 dargestellten Verbindung in die erste Mischung:
Messen einer Konzentration von Ammoniak, das in der ersten Mischung enthalten ist.

7. Verfahren nach Anspruch 1, wobei die Verbindung auf Silazanbasis Hexamethyldisilazan ist, der Alkohol Ethanol ist und das Alkoxysilan Trimethylethoxysilan ist.

8. Verfahren nach Anspruch 1, wobei die durch Formel 2 dargestellte Verbindung Trimethylchlorsilan ist.

9. Verfahren nach Anspruch 1, wobei die Reaktion des Alkohols mit der Verbindung auf Silazanbasis in Schritt (1) unter der Bedingung eines Säurekatalysators durchgeführt wird.

10. Verfahren nach Anspruch 9, wobei der Säurekatalysator eines oder mehrere ausgewählt aus der Gruppe bestehend aus Salpetersäure, Salzsäure, Essigsäure, Schwefelsäure und Fluorwasserstoffsäure umfasst.

## Revendications

1. Méthode de fabrication d'un composé alcoxysilane, comprenant:
(1) ajouter un alcool à un composé à base de silazane représenté par la formule 1 suivante et laisser l'alcool réagir avec le composé à base de silazane pour préparer un premier mélange comprenant un composé alcoxysilane et de l'ammoniac;
(2) ajouter un alcool et un composé représenté par la formule 2 suivante au premier mélange et laisser l'alcool et le composé de formule 2 réagir avec le premier mélange pour préparer un second mélange dans lequel un composé alcoxysilane supplémentaire et un sel d'ammonium sont générés;
(3) ajouter un solvant aqueux au second mélange pour dissoudre le sel d'ammonium; et
(4) séparation et élimination d'une couche aqueuse dans laquelle le sel d'ammonium est dissous afin d'obtenir un composé alcoxysilane: 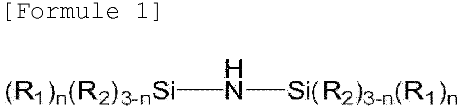
[Formule 2] (R₁)ₙ(R₂)₃₋ₙSi-X
où l'alcool est un composé représenté par la formule 3 suivante, et le composé alcoxysilane est un composé représenté par la formule 4 suivante:
[Formule 3] R₃OH
[Formule 4] (R₁)ₙ(R₂)₃₋ₙSi-O-R₃
où R₁ et R₃ sont chacun indépendamment un groupe alkyle ayant 1 à 8 atomes de carbone, R₂est un atome d'hydrogène ou un groupe alkyle ayant 1 à 8 atomes de carbone, n est un nombre entier allant de 1 à 3, et X est Cl ou Br.

2. Méthode de la revendication 1, dans laquelle le composé à base de silazane comprend un ou plusieurs composés choisis dans le groupe constitué d'un dialkyldisilazane, d'un tétraalkyldisilazane et d'un hexaalkyldisilazane.

3. Méthode de la revendication 1, dans laquelle l'alcool comprend un ou plusieurs alcools choisis dans le groupe constitué par le méthanol, l'éthanol, le propanol, l'isopropanol, le butanol, le pentanol, l'hexanol, l'heptanol et l'octanol.

4. Méthode de la revendication 1, dans laquelle le composé alcoxysilane comprend un ou plusieurs composés choisis dans le groupe constitué d'un composé monoalkoxysilane, d'un composé dialkoxysilane et d'un composé trialkoxysilane.

5. Méthode de la revendication 1, dans laquelle le composé représenté par la formule 2 est ajouté au(x) même(s) équivalent(s) que l'ammoniac dans le premier mélange.

6. Méthode selon la revendication 1, comprenant, avant d'introduire le composé représenté par la Formule 2 dans le premier mélange:
mesurer une concentration d'ammoniac incluse dans le premier mélange.

7. Méthode de la revendication 1, dans laquelle le composé à base de silazane est l'hexaméthyldisilazane, l'alcool est l'éthanol et l'alcoxysilane est le triméthyléthoxysilane.

8. Méthode de la revendication 1, dans laquelle le composé représenté par la formule 2 est le triméthylchlorosilane.

9. Méthode de la revendication 1, dans laquelle la réaction de l'alcool avec le composé à base de silazane à l'étape (1) est effectuée sous l'action d'un catalyseur acide.

10. Méthode de la revendication 9, dans laquelle le catalyseur acide comprend un ou plusieurs éléments choisis dans le groupe constitué de l'acide nitrique, de l'acide chlorhydrique, de l'acide acétique, de l'acide sulfurique et de l'acide fluorhydrique.
